# EUROPEAN PATENT SPECIFICATION

(11) **EP 2 662 952 B1**
(45) Date of publication and mention of the grant of the patent: **24.06.2015**
(21) Application number: 12167658.9
(22) Date of filing: 11.05.2012
(51) Int. Cl.: H02K 1/20, H02K 7/18, H02K 5/20, H02K 9/04

(54) **Generator, in particular for a wind turbine**
Generator, insbesondere für eine Windturbine
Générateur, en particulier pour éolienne

(43) Date of publication of application: 13.11.2013
(73) Proprietor: Siemens Aktiengesellschaft, 80333 München (DE)
(72) Inventor: Soerensen, Peter Hessellund, 8740 Brædstrup (DK)

(56) References cited:
- EP-A1- 2 378 631
- WO-A1-2011/009514
- US-A1- 2011 133 580
- US-A1- 2012 080 983

## Description

The invention relates to a generator, in particular for a wind turbine, comprising a rotor rotatably mounted relative to a stator and a support member for stationary mounting the stator.

Electrical machines, in particular generators, of this type are well established in the state of art. Generators arranged in nacelles of wind turbines typically comprise rotors that mount a plurality of permanent magnets. The rotor is either rigidly connected to rotating components of the wind turbine or connected to the rotating components of the wind turbine by an intermediately arranged transmission converting mechanical torque. Wind turbines of the first type are referred to as directly driven, whereas wind turbines of the latter type of the indirectly driven type

Documents EP 2 378 631 A1, WO 2011/009514 A1, US 2012/080983 and US 2011/133580 disclose generators for wind turbines.

Heat is generated during operation of the generator, in particular by means of magnetisation or remagnetisation of the stator. Hence, the stator is typically cooled by a gaseous or liquid coolant conducted in ducts arranged in the stator.

Furthermore, it is common to manufacture a stator from a plurality of laminations made from a metal. The laminations are configured to minimize the effects of hysteresis so as to counteract heating-up of the stator during operation of the generator.

It is an object of the present invention to provide a generator with an improved means of cooling.

The object is achieved by a generator of the aforementioned type, wherein the stator comprises at least one groove arranged in a surface of the stator that is bounded by a surface of the support member so as to form at least one duct for a conducting coolant.

The stator may in particular be manufactured from a plurality of laminations made from metal. Arrangement of the at least one groove on the surface of the stator is a simple step of the manufacturing procedure that may be readily incorporated in a serial production. When the stator is firmly mounted to the support member, the at least one groove is delimited in a radial direction by the surface of the support member so that the at least one duct is formed.

Preferably, the coolant conducted in the at least one duct is a gaseous medium, in particular air. In embodiments comprising laminated stators and cooling by means of a liquid coolant is desired, a tubular pipe may be arranged in the at least one duct.

The arrangement of the at least on duct bounded by surfaces of the stator and the support member is particularly suited for use in combination with gaseous coolants. During operation of generator, the flow of the gaseous coolant is distributed over various surface areas for heat dissipation. One part of the flow is conducted through the air gap provided between the rotor and the stator, whereas another part of the flow is conducted through the at least one duct. Hence, cooling is provided by two streams of coolant that are separated from each other in the radial direction. The coolant is evenly distributed on the windings accommodated in slots of the stator. Furthermore, a large area of the stator is used for heat dissipation. As the flow of the coolant is partially conducted in the at least one duct, the flow of the coolant in the air gap arranged between the rotor and the stator is reduced. Hence, a partial thermal insulation of the permanent magnets arranged on the rotor is achieved. This reduces heating of the rotor and thus may also counteract demagnetisation of the permanent magnets during operation of the generator.

In one embodiment of the invention, the at least one groove is provided on an inner surface of the stator and bounded by an outer surface of the support member. This embodiment corresponds to a generator comprising an external rotor that circumferentially surrounds the stator. In an alternative embodiment, the rotor is arranged as an internal rotor. Consequently, the at least one groove is arranged on an outer surface of the stator and bounded by an inner surface of the support member enclosing the stator when the generator is assembled.

Preferably, the stator comprises a plurality of grooves distributed at regular intervals around a circumference of the stator so as to form a plurality of ducts for conducting the coolant. The arrangement of a plurality of ducts allows for an even distribution of coolant over the stator so as to minimize the risk of damages induced by over-heating, in particular short circuits.

The at least one groove extends preferably in an axial direction defined by an axis of rotation of the rotor relative to the stator. The flow of the coolant conducted in the at least one groove and in the air gap arranged between the rotor and the stator flows parallel to the axial direction for even dissipation of heat from the windings. Sufficient cooling may be achieved at low flow velocities and pressure drops in the at least one duct.

Generators for a wind turbines typically comprise stators of significant size which are difficult to produce as one piece by a process of moulding. In a preferred embodiment of the invention, the stator is assembled from a plurality of a stator segments to simplify the manufacturing process. Each stator segment may be produced by a process of moulding and/or may be made from metal laminations. Each stator segment comprises at least one groove and extends over an annular section of the stator when assembled.

In a preferred embodiment of the invention, the at least one duct is provided with cooling fins. The cooling fins may be elements of metal integral with the support member and/or the stator. The cooling fins protrude into the at least one duct so as to increase an inner surface used for transferring heat to the coolant.

The support member is preferably hollow and comprises two annular end walls bounding an interior. Each of the end walls comprises a plurality of apertures circumferentially distributed at regular intervals. The hollow support member having end walls with apertures may be used for conducting the gaseous coolant, in particular for the recirculation of the flow of the coolant conducted in the at least one duct and/or air gap. The flow of the coolant conducted in the hollow support member flows opposite to the flow of coolant conducted in the at least one duct and/or the air gap. Hence, the gaseous coolant may circulate within the generator that is provided with a closed-loop cooling circuit.

In further development of the invention it is proposed to additionally arrange a partition wall between the end walls of the support members. The partition wall divides the interior of the hollow support member into two chambers. A fan generating a flow of the gaseous coolant is mounted on the partition wall. Consequently, the interior of the support member is divided into a pressure and a suction chamber. The fan may be controlled so as to generate suitable flow velocities that provide sufficient cooling. In particular, the flow velocity generated by the fan may be controlled according to a rotational speed of the rotor and/or the temperature of the stator. For this purpose, the generator may comprise a suitable control device that is connected to suitable sensors, in particular sensors capable of measuring a temperature of the stator.

According to alternative embodiments of the invention, the at least one fan is an axial or a centrifugal fan.

Additionally, a heat exchange means of a liquid-cooling device may be mounted on the partition wall. Hence, heat may be transferred from the gaseous coolant circulating within the stator to a liquid coolant conducted in an heat exchanger. The generator is preferably provided with a first cooling system comprising a gaseous coolant circulating through the at least one duct and the interior of the support member that removes heat from the windings and other components of the stator. As the gaseous coolant heats up during operation of the generator, heat is removed from the gaseous coolant by a second cooling system that comprises a liquid coolant that flows through the heat exchanger mounted on the partition wall between the suction and the pressure chamber for optimal heat exchange.

The invention further relates to a wind turbine with a generator as described herein before. As the generator is provided with improved means of heat dissipation, damages induced by overheating may be avoided. Furthermore, demagnetisation of the permanent magnets may be reduced. The wind turbine having a generator may thus operate reliably for prolonged periods of time. This minimises maintenance effort which in turn allows for setting up the wind turbine at remote locations, in particular offshore platforms.

In one preferred embodiment of the invention, the support member is a main shaft of the wind turbine that is stationary arranged within the nacelle. The stator having the at least one groove is directly mounted on the main shaft for optimal use of existing installation space. The at least one duct conducting the gaseous coolant in the axial direction provides sufficient cooling, so that additional radial apertures disposed in the main shaft for cooling purposes are not required.

The invention is explained in further detail with respect to a specific embodiment and with reference to the figures, wherein:
- fig. 1: shows a generator having a stator with a plurality of ducts in a sectional view, and
- fig. 2: shows the generator in a sectional and perspective view.

Like parts are indicated in all figures with alike reference symbols.

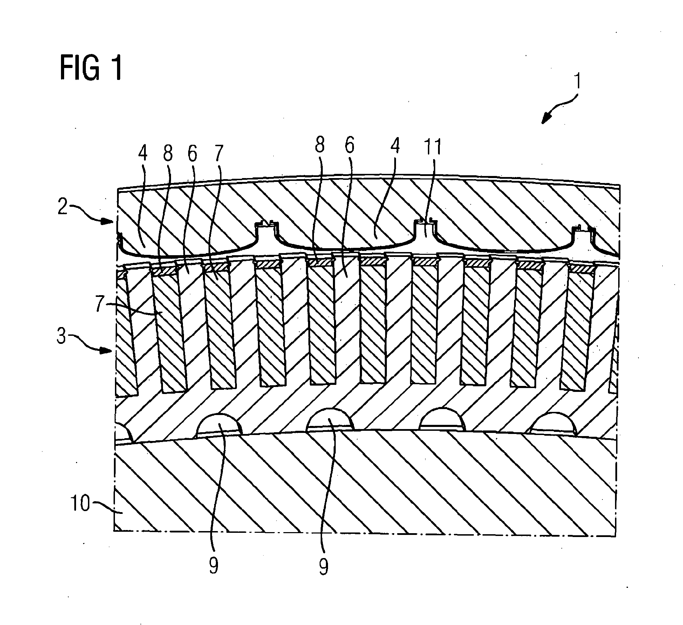

Fig. 1 illustrates schematically a generator 1 having a rotor 2 rotably arranged with respect to a stator 3. The rotor 2 and the stator 3 comprise annular structures. The rotor 2 comprises a plurality of permanent magnets (not illustrated) and pole shoes 4. The stator 3 comprises an annular base member 5. A plurality of radial protrusions 6 extends from the base member 5 in the radial outward direction. The radial protrusions 6 are distributed around a circumference of the stator 3 at regular intervals so as to define gaps accommodating conductive windings 7. Each gap 6 is covered by a wedge 8 of a material with sufficient magnetic permeability so that an electric current may be induced in the windings 7 when the rotor 2 rotates relative to the stator 3.

The working principle of electrical machines of this type, in particular generators, is well known. A further explanation is thus omitted.

A plurality of grooves is arranged on a lower, inner surface of the stator 3. The grooves are bounded by an outer surface of an annular support member 10 firmly connected to the stator. Thus, the arrangement of the stator 3 and the support member 10 exhibits a plurality of ducts 9 arranged between the support member 10 and the stator 3.

Each duct 9 is displaced with respect to an air gap 11 provided between the rotor 2 and the stator 3 in a radial direction. A gaseous coolant, in particular air, is conducted through the air gap 11 and the plurality of ducts 9 extending in the axial direction parallel to the axis of rotation of the rotor 2 relative to the stator 3.

The stator 3 is made from a plurality of laminations made from a metal. The windings 7 are made from copper.

In an alternative embodiment, the windings 7 are made from aluminium.

Although the exemplary embodiment shown in fig. 1 is configured as a generator 1 having an external rotor 2, it is suggested to provide a similar arrangement of ducts 9 conducting a coolant for generators comprising internal rotors. In these embodiments, the grooves are arranged on an outer surface of the stator 3. Correspondingly, the grooves are bounded by an inner surface of the support member 10 that surrounds the stator 3 which in turn encloses the internal rotor.

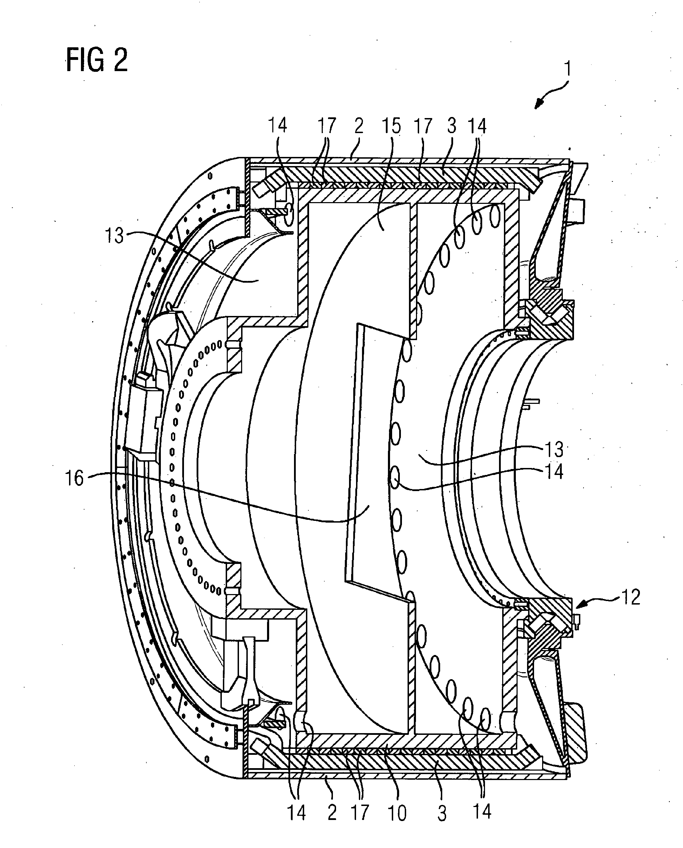

Fig. 2 shows the generator 1 comprising the external rotor 2 as illustrated before with reference to fig. 1 in a perspective and sectional view. The rotor 2 is rotatably mounted with respect to the stator 3. Rotatable support is achieved by a bearing 12 that is configured in the exemplary embodiment shown as a double tapered roller bearing. The stator 3 is firmly attached to a support member 10 that is, in the exemplary example shown in fig. 2, a main shaft of a wind turbine. The main shaft is stationary arranged within a nacelle of the wind turbine.

The stator 3 is firmly attached to the support member 10 by a plurality of bolts 17.

The support member 10 is hollow and has end walls 13 that delimit an interior. Each end wall 13 comprises a plurality of apertures 14 for conducting the gaseous coolant through the interior of the support member 10. A partition wall 15 divides the interior of the support member 10 in two chambers. In the exemplary embodiment shown in fig. 2, the partition wall 15 has a central opening 16 connecting the two inner chambers of the support member 10. The opening 16 provides a means for mounting a fan that is adapted to generate a flow of gaseous coolant within the interior of the support member 10. Consequently, the interior of the support member 10 is divided into a suction chamber and a pressure chamber that are separated by the partition wall 15. Additionally, a means for heat exchange is mounted on the central opening 16 of the partition wall 15. The means for heat exchange is part of a liquid-cooling device that is arranged to remove heat from the gaseous coolant circulating within the generator 1.

During operation, a flow of gaseous coolant is generated by the fan so that a part of the coolant flows through the plurality of ducts 9 and the air gap 11 as best seen in fig. 1. The gaseous coolant flows through the ducts 9 and air gap 11 in the axial direction. The coolant is conducted through the apertures 14 provided in the end walls 13 and through the interior of the support member 10. Hence, the gaseous coolant circulates within the generator 1 so as to maintain the temperature stator 3 in a range suitable for operation.

The heat exchange means mounted on the partition wall 15 transfers heat from the gaseous coolant circulating in the generator 1 to a secondary cooling circuit. The rotational speed of the fan is controlled by a control device (not illustrated). In particular, a control device may vary the rotational speed of the fan according to a parameter of operation of the wind turbine. Even more particularly, the control device may adjust the flow velocity of the gaseous coolant according to a rotational velocity of the rotor 2 and/or a temperature of the stator 3 detected by suitable sensors.

Although the present invention has been described in detail with reference to the preferred embodiment, the present invention is not limited by the disclosed examples from which the skilled person is able to derive other variations without departing from the scope of the invention.

## Claims

1. Generator (1), in particular for a wind turbine, comprising a rotor (2) rotatably mounted relative to a stator (3) and a support member (10) for stationary mounting the stator (3), whereby the stator (3) comprises at least one groove arranged on a surface of the stator (3) that is bounded by a surface of the support member (10) so as to form at least one duct (9) for conducting a coolant, **characterized in that** the support member (10) is hollow and comprises two annular end walls (13) bounding an interior, wherein each of the end walls (13) comprises a plurality of apertures (14) circumferentially distributed at regular intervals.

2. Generator (1) according to claim 1, **characterized in that** the stator (3) comprises a plurality of grooves distributed at regular intervals around a circumference of the stator (3) so as to form a plurality of ducts (9) for conducting the coolant.

3. Generator (1) according to claim 1 or 2, **characterized in that** the at least one groove extends in an axial direction defined by an axis of rotation of the rotor (2) relative to the stator (3).

4. Generator (1) according to any of the previous claims, **characterized in that** the stator (3) is assembled from a plurality of stator segments, each stator segment comprising at least one groove.

5. Generator (1) according to any of the previous claims, **characterized in that** cooling fins are arranged within the at least one duct (9).

6. Generator (1) according to any of the previous claims., **characterized in that** an additional partition wall (15) arranged between the end walls (13) divides the interior of the support member (10) into two chambers, wherein the partition wall (15) mounts at least one fan so as to generate a flow of a gaseous coolant within the interior of the support member (10).

7. Generator (1) of claim 6, **characterized in that** the at least one fan is an axial or a centrifugal fan.

8. Generator (1) of claim 6 or 7, characterized that a heat exchange means of a liquid-cooling device is mounted on the partition wall (15).

9. Wind turbine with a generator (1) according to any of the previous claims.

10. Wind turbine according to claim 9, **characterized in that** the support member (10) is a main shaft stationary arranged within a nacelle of the wind turbine.

## Patentansprüche

1. Generator (1), insbesondere für eine Windenergieanlage, mit einem in Bezug auf einen Stator (3) drehbar installierten Rotor (2) und einem Trägerelement (10) zum ortsfesten Installieren des Stators (3), wobei der Stator (3) mindestens eine Nut umfasst, die an einer Oberfläche des Stators (3) angeordnet ist, an die eine Oberfläche des Trägerelements (10) so angrenzt, dass mindestens eine Leitung (9) zum Leiten eines Kühlmittels gebildet wird, **dadurch gekennzeichnet, dass** das Trägerelement (10) hohl ist und zwei ringförmige Stirnwände (13) umfasst, die einen Innenraum begrenzen, wobei jede der Stirnwände (13) mehrere in gleichmäßigen Abständen um den Umfang herum verteilte Öffnungen (14) umfasst.

2. Generator (1) nach Anspruch 1, **dadurch gekennzeichnet, dass** der Stator (3) mehrere Nuten umfasst, die in gleichmäßigen Abständen so um einen Umfang des Stators (3) herum verteilt sind, dass mehrere Leitungen (9) zum Leiten des Kühlmittels gebildet werden.

3. Generator (1) nach Anspruch 1 oder 2, **dadurch gekennzeichnet, dass** die mindestens eine Nut in einer axialen Richtung verläuft, die von einer Rotationsachse des Rotors (2) in Bezug zum Stator (3) definiert wird.

4. Generator (1) nach einem der vorhergehenden Ansprüche, **dadurch gekennzeichnet, dass** der Stator (3) aus mehreren Statorsegmenten zusammengebaut ist, wobei jedes Statorsegment mindestens eine Nut umfasst.

5. Generator (1) nach einem der vorhergehenden Ansprüche, **dadurch gekennzeichnet, dass** in der mindestens einen Leitung (9) Kühlrippen angeordnet sind.

6. Generator (1) nach einem der vorhergehenden Ansprüche, **dadurch gekennzeichnet, dass** eine zwischen den Stirnwänden (13) angeordnete zusätzliche Trennwand (15) den Innenraum des Trägerelements (10) in zwei Kammern unterteilt, wobei die Trennwand (15) mindestens einen Ventilator aufnimmt, so dass ein Strom eines gasförmigen Kühlmittels in dem Innenraum des Trägerelements (10) erzeugt wird.

7. Generator (1) nach Anspruch 6, **dadurch gekennzeichnet, dass** es sich bei dem mindestens einen Ventilator um einen Axial- oder einen Zentrifugalventilator handelt.

8. Generator (1) nach Anspruch 6 oder 7, **dadurch gekennzeichnet, dass** ein Wärmetauschmittel einer Flüssigkeitskühlvorrichtung an der Trennwand (15) installiert ist.

9. Windenergieanlage mit einem Generator (1) nach einem der vorhergehenden Ansprüche.

10. Windenergieanlage nach Anspruch 9, **dadurch gekennzeichnet, dass** es sich bei dem Trägerelement (10) um eine Hauptwelle handelt, die ortsfest in einer Gondel der Windenergieanlage angeordnet ist.

## Revendications

1. Générateur (1), en particulier pour une éolienne, comprenant un rotor (2) monté de manière rotative par rapport à un stator (3) et un élément de support (10) pour monter de manière fixe le stator (3), moyennant quoi le stator (3) comprend au moins une rainure agencée sur une surface du stator (3) qui est délimitée par une surface de l'élément de support (10) de manière à former au moins un conduit (9) pour conduire un liquide de refroidissement, **caractérisé en ce que** l'élément de support (10) est creux et comprend deux parois d'extrémité annulaires (13) contenant un intérieur, dans lequel chacune des parois d'extrémité (13) comprend une pluralité d'ouvertures (14) réparties de manière circonférentielle à intervalles réguliers.

2. Générateur (1) selon la revendication 1, **caractérisé en ce que** le stator (3) comprend une pluralité de rainures réparties à intervalles réguliers autour d'une circonférence du stator (3) de manière à former une pluralité de conduits (9) pour conduire le liquide de refroidissement.

3. Générateur (1) selon la revendication 1 ou 2, **caractérisé en ce que** l'au moins une rainure s'étend dans une direction axiale définie par un axe de rotation du rotor (2) par rapport au stator (3).

4. Générateur (1) selon l'une quelconque des revendications précédentes, **caractérisé en ce que** le stator (3) est assemblé à partir d'une pluralité de segments de stator, chaque segment de stator comprenant au moins une rainure.

5. Générateur (1) selon l'une quelconque des revendications précédentes, **caractérisé en ce que** des ailettes de refroidissement sont agencées à l'intérieur de l'au moins un conduit (9).

6. Générateur (1) selon l'une quelconque des revendications précédentes, **caractérisé en ce qu'**une paroi de séparation supplémentaire (15) agencée entre les parois d'extrémité (13) divise l'intérieur de l'élément de support (10) en deux chambres, dans lequel la paroi de séparation (15) monte au moins un ventilateur de manière à générer un flux de liquide de refroidissement gazeux à l'intérieur de l'élément de support (10).

7. Générateur (1) selon la revendication 6, **caractérisé en ce que** l'au moins un ventilateur est un ventilateur axial ou un ventilateur centrifuge.

8. Générateur (1) selon la revendication 6 ou 7, **caractérisé en ce qu'**un moyen d'échange de chaleur d'un dispositif de refroidissement de liquide est monté sur la paroi de séparation (15).

9. Eolienne avec un générateur (1) selon l'une quelconque des revendications précédentes.

10. Eolienne selon la revendication 9, **caractérisée en ce que** l'élément de support (10) est un arbre principal agencé de manière fixe à l'intérieur d'une nacelle de l'éolienne.
